(19) Europäisches Patentamt
European Patent Office
Office européen des brevets

(11) **EP 2 141 825 A1**

(12) **EUROPEAN PATENT APPLICATION**

(43) Date of publication:
**06.01.2010 Bulletin 2010/01**

(51) Int Cl.:
*H04B 7/04* (2006.01)     *H04B 7/06* (2006.01)

(21) Application number: **08290632.2**

(22) Date of filing: **30.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Alcatel Lucent**
**75008 Paris (FR)**

(72) Inventors:
• **Ohm, Michael, Dr.-Ing.**
**70372 Stuttgart (DE)**
• **Schönerstedt, Lutz, Dipl.-Ing.**
**71634 Ludwigsburg (DE)**

(74) Representative: **Zinsinger, Norbert et al**
**Louis Pöhlau Lohrentz,**
**P.O. Box 30 55**
**90014 Nürnberg (DE)**

(54) **Method of reducing intra-cell spatial interference in a mobile cellular network**

(57) The invention concerns a method of reducing intra-cell spatial interference and a multiple antenna mobile station: A base station (21) provides a code book comprising a set of precoding vectors defining antenna weights of two or more transmit antennas (430) of the base station (21). At least one multiple antenna mobile station (41, 42, 43) is informed about a subset of one or more precoding vectors selected from the code book associated with the base station (21). The at least one multiple antenna mobile station (41, 42, 43) comprises two or more receive antennas (430). The at least one multiple antenna mobile station (41, 42, 43) determines receive antenna weights associated with the two or more receive antennas (430) of the at least one multiple antenna mobile station (41, 42, 43) based on the subset of one or more precoding vectors. The at least one multiple antenna mobile station (41, 42, 43) applies the determined receive antenna weights to its associated receive antenna of the two or more receive antennas (430) of the at least one multiple antenna mobile station (41, 42, 43) for performing intra-cell spatial interference rejection combining.

*Fig. 1*

**Description**

The present invention relates to a method of and a base station for reducing intra-cell spatial interference in a mobile cellular network.

The technical field of the present invention is directed to cellular systems or wireless data systems, in which a base station (BS = base station) serves a number of mobile stations (MS = mobile station) on the same time/frequency resources by means of a MU-MIMO system (MU = multiple user, MIMO = multiple input multiple output). The MU-MIMO system is a system wherein a base station comprises $N \geq 2$ transmit antennas and serves a number of mobile stations on the same time/frequency resources. In order to allow each mobile station to receive only data streams intended for the mobile station, the base station has to apply certain antenna weights, also called precoding vectors, to the data streams that the base station transmits to the mobile stations.

In order to select the precoding vectors properly, the base station requires some channel state information. In TDD systems (TDD = time-division duplex), this channel state information can be obtained by uplink channel sounding because of the reciprocity of the uplink and downlink channels. In FDD systems (FDD = frequency-division duplex), however, this reciprocity is not available and can thus not be used. There is a need to define a fixed or a preset set of precoding vectors. The set of precoding vectors is called code book. The code book is known to both the base station and mobile station. The mobile station selects a precoding vector that maximizes or minimizes some metric defining a signal quality parameter in order to improve its received signal quality. However, high intra-cell spatial interference can still exist.

It is the object of the present invention to provide an improved reduction of intra-cell spatial interference in a mobile cellular network.

The object of the present invention is achieved by a method of reducing intra-cell spatial interference in a mobile cellular network, wherein a base station provides a code book comprising a set of precoding vectors defining antenna weights of two or more transmit antennas of the base station, at least one multiple antenna mobile station is informed about a subset of one or more precoding vectors selected from the code book associated with the base station, the at least one multiple antenna mobile station comprises two or more receive antennas, the at least one multiple antenna mobile station determines receive antenna weights associated with the two or more receive antennas of the at least one multiple antenna mobile station based on the subset of one or more precoding vectors, and the at least one multiple antenna mobile station applies the determined receive antenna weights to its associated receive antenna of the two or more receive antennas of the at least one multiple antenna mobile station for performing intra-cell spatial interference rejection combining. The object of the present invention is also achieved by a multiple antenna mobile station in a mobile cellular network, wherein the multiple antenna mobile station comprises two or more receive antennas and a control unit, the control unit determines receive antenna weights associated with the two or more receive antennas of the multiple antenna mobile station based on the subset of precoding vectors selected from a code book associated with the base station, the code book comprising a subset of one or more precoding vectors defining antenna weights of two or more transmit antennas of a base station, and the control unit applies the determined receive antenna weights to their associated receive antenna of the two or more receive antennas of the multiple antenna mobile station for performing intra-cell spatial interference rejection combining.

The present invention provides an effective method for reducing intra-cell spatial interference. In practice, only the mobile station has complete channel information. Therefore, the base station can only estimate signal quality parameters, such as the signal-to-noise-and-interference-ratio. However, the multiple antenna mobile station is able to measure or calculate a suitable signal quality parameter. The present invention removes this disadvantage. The multiple antenna mobile station comprises two or more receive antennas and is able to determine receive antenna weights for its two or more receive antennas based on the subset of one or more precoding vectors. By determining receive antenna weights based on the subset of one or more precoding vectors, it is possible to consider further information or conditions of the mobile cellular network and calculate suitable antenna weights with an acceptable number of calculations. Therefore, intra-cell multi-user spatial interference is reduced, i.e. the multiple antenna mobile station is able to reject, at least to some extend, intra-cell spatial multi-user interference. Consequently, the signal quality at the multiple antenna mobile station is improved, and thus the user data throughput provided by the base station to each of its associated mobile stations is increased.

Further advantages are achieved by embodiments of the present invention indicated by the dependent claims.

According to a preferred embodiment of the present invention, the subset of one or more precoding vectors comprises the precoding vectors actually used by the base station for the mobile stations served by the base station on the same time/frequency resource which the at least one multiple antenna mobile station is served on. By means of providing the precoding vectors actually used by the base station, the multiple antenna mobile station has all necessary information in order to perform intra-cell (multi-user) interference rejection combining effectively.

Preferably, the base station informs the at least one multiple antenna mobile station about the subset of one or more precoding vectors by means of signaling.

According to a preferred embodiment of the present invention, the at least one multiple antenna mobile station creates a precoding matrix from the received subset of one or more precoding vectors and calculates a weighting vector defining the receive antenna weights based on the precoding matrix and a channel matrix. Similarly to the foregoing preferred embodiment, the number of calculations and/or amount of calculation of the weighting vector required to perform, at least to some extend, intra-cell (multi-user) interference rejection combining is reduced by the precoding matrix created from a subset of one or more precoding vectors. Any further multiple antenna mobile station informed about the subset of one or more precoding vectors, and which then performs intra-cell (multi-user) interference rejection combining, enhances the reduction of intra-cell multi-user interference within the cellular mobile network.

Preferable, the at least one multiple antenna base station determines receive antenna weights based on the subset of precoding vectors and a channel matrix. The at least one multiple antenna mobile station estimates or determines the channel matrix based on a measurement of one or more reference signals transmitted by the base station. The channel matrix comprises one or more channel vectors which describe the channels between the two or more transmit antennas of the base station and one of the two or more receive antennas of the at least one multiple antenna mobile station.

According to a preferred embodiment of the present invention, the subset of one or more precoding vectors comprises a list of valid precoding vector combinations. It is possible that the subset of one or more valid precoding vector combinations comprises all theoretically possible combinations which can be created by the precoding vectors of the code book.

According to a preferred embodiment of the present invention, the base station or the multiple antenna mobile station selects two or more valid precoding vector combinations from the code book, wherein there are less valid than possible precoding vector combinations. It is possible to create a precoding matrix based on the valid precoding vector combinations, which defines a valid precoding matrix.

Preferably, the base station only uses precoding vector combinations according to a concept of preferred precoding vector indices and preferred companion precoding vector indices. Only indices of precoding vectors are transmitted between the base station and the mobile stations, whereby the code book comprises the assignment of precoding vector indices to the respective precoding vectors. According to the concept of preferred precoding vector indices and preferred companion precoding vector indices, the multiple antenna mobile stations do not only report their preferred precoding vector indices in an uplink feedback via an uplink channel to the base station, but also the indices of preferred companion precoding vectors. Preferred companion precoding vectors are precoding vectors which produce when used for other mobile stations served on the same time/frequency resource a low or at least acceptable intra-cell spatial multi-user interference at the mobile station. The base station can select the mobile stations in such a way that the preferred precoding vector indices may be mutually exclusive and the preferred precoding vector indices of each mobile station are within a set of preferred companion precoding vector indices of all other mobile stations, or at least that the preferred precoding vector indices of each mobile station are within the set of preferred companion precoding vector indices of a large number of other mobile stations served by the base station.

According to a preferred embodiment of the present invention, the at least one multiple antenna mobile station calculates one or more preferred precoding vectors and one or more preferred companion precoding vectors. Then, the at least one multiple antenna mobile station selects one or more precoding vector combinations that comprise at least one preferred precoding vector and at least one companion precoding vector as preferred precoding vector combinations.

Preferably, it selects all precoding vector combinations that fulfill these conditions as preferred precoding vector combinations.

According to a preferred embodiment of the present invention, the base station or the multiple antenna mobile station creates a precoding matrix for each valid or preferred precoding vector combination. Each precoding matrix comprises the respective valid or preferred precoding vector combination. For each precoding matrix, the multiple antenna mobile station calculates the post detection signal-to-interference-and-noise-ratio. The multiple antenna mobile station chooses the precoding matrix which gives the lowest post-detection signal-to-interference-and-noise-ratio for the calculation of a weighting vector. The weighting vector defines the receive antenna weights of the multiple antenna mobile station. Therefore, it is possible to provide at least one reasonable intra-cell (multi-user) spatial interference rejection combining by means of a reduced calculation amount for the weighting vector without having the complete information available to perform an intra-cell (multi-user) spatial interference rejection combining.

According to a preferred embodiment of the present invention, the base station and/or the multiple antenna mobile station performs following procedure: It creates one or more precoding matrices, wherein each precoding matrix comprises one of the valid or preferred precoding vector combinations. Then, the base station or the multiple antenna mobile station calculates a weighting vector based on the matrices. The weighting vector defines the receive antenna weights of the multiple antenna mobile station. The multiple antenna mobile station applies the receive antenna weights defined by the weighting vector on the two or more receive antennas of the at least one multiple antenna mobile station. Then, the multiple antenna mobile station performs forward error correction decoding on a data stream received from the base station. The foregoing steps of calculating, applying and performing are repeated for the next precoding matrix if correct decoding is not possible.

Preferably, the precoding matrices are ordered or arranged according probability of usage by the base station. It is possible to test the preferred, valid, and/or small precoding matrices first. In case sufficient intra-cell multi-user spatial rejection by the combining is available, then no further precoding matrix has to be tested. Thereby, the number of calculations at the multiple antenna mobile station is reduced significantly.

These, as well as further features and advantages of the invention will be better appreciated by reading the following detailed description of presently preferred embodiments taken with the accompanying drawing of:

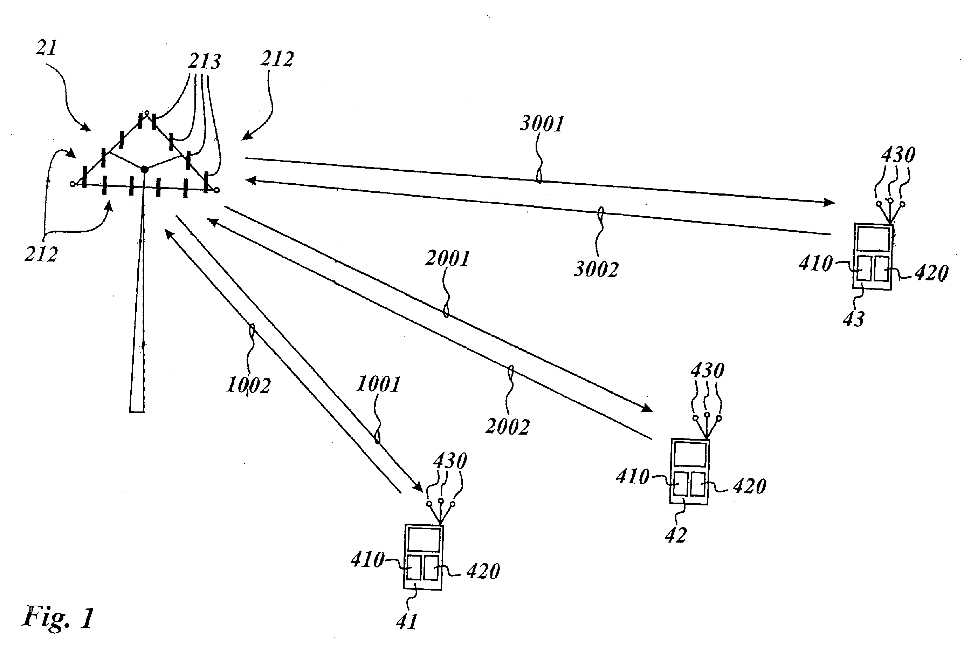

Figure 1    shows a view of a base station and three multiple antenna mobile stations.

Fig. 1 shows a base station 21 and three multiple antenna mobile stations 41, 42, 43 located in a cell of a mobile cellular network.

The base station 21 comprises an antenna with three antenna units 212. Each antenna unit 212 is formed of a linear antenna array with four equal linear antenna elements 213 arranged in parallel. It is also possible, that the antenna unit 212 of the base station 21 has any other antenna configuration, e.g. horizontally or vertically polarized antenna elements 213 or cross-polarized antenna elements, whereby preferably two antenna elements arranged at +45˚ and two antenna elements arranged at -45˚. Furthermore, the base station 21 comprises a control unit (not shown) composed of software and hardware means, e.g. comprising one or more data processing units, a software platform, and one or more application programs running on this system. The control unit of the base station 21 applies different precoding vectors to each antenna array of the base station 21, in order to control beam forming. A beam is defined by its associated precoding vector. A precoding vector is a complex vector defining a complex antenna weight for each linear antenna element 213. Preferably, the absolute value of the antenna weight equals 1 and thereby only defines a phase factor. It is also possible to define the amplitude when the absolute value of the antenna weight does not equal 1.

In order to access the base station 21 wirelessly, each multiple antenna mobile station 41, 42, 43 comprises a control unit 410, three receive antennas 430, and a RF (RF = radio frequency) communication unit 420 feeding the antennas. However, it is also possible that a multiple antenna mobile station comprises another number of receive antennas, e.g. 2, 4, or 8 receive antennas. The control units 410 of the multiple antenna mobile stations 41, 42, 43 control the receive antennas 430 of the multiple antenna mobile stations 41, 42, 43 and provide wireless communication functionality for the multiple antenna mobile stations 41, 42, 43. Furthermore, the control units 410 of the multiple antenna mobile stations 41, 42, 43 provide functionality for calculating and/or measuring signal quality parameters, such as SIR (SIR = signal-to-interference-ratio), SNR (SNR = signal-to-noise-ratio), SINR (SINR = signal-to-interference-and noise-ratio), and/or received signal strength. The control units 410 of the multiple antenna mobile stations 41, 42, 43 also provide functionality for sending, receiving and/or transmitting signals providing wireless communication between mobile stations.

In a preferred embodiment of the invention, the base station 21 transmits information to its associated multiple antenna mobile stations 41, 42, and 43 via downlink channels 1001, 2001, and 3001, respectively. The multiple antenna mobile stations 41, 42 and 43, which are associated with the base station 21, transmit information to their base station 21 via uplink channels 1002, 2002, and 3002, respectively. The downlink channels 1001, 2001, 3001 are frequency-separated from uplink channels 1002, 2002, 3002.

To facilitate understanding of the description of the following embodiments in combination with the following formulas additional indices/labels i, j are introduced.

Preferably, the base station 21 and the multiple antenna mobile stations 41, 42, 43 are part of a MU-MIMO system. For example, the base station 21 has $N \geq 2$ transmit antennas, which serve a number of K multiple antenna mobile stations 41, 42, 43. Each multiple antenna mobile station 41, 42, 43 $i$, $i = 1,..., K$ comprises $M_i \geq 2$ receive antenna units, also called antenna units. For transmitting data on a certain time/frequency resource, the base station 21 selects a group of multiple antenna mobile stations 41, 42, 43 from all $K$ available multiple antenna mobile stations. Without loss of generality, it is assumed that multiple antenna mobile stations 41, 42, 43 $j$, $j = 1,..., L$, $L \leq N$ are selected.

In an introductory example, it is assumed that each multiple antenna mobile station 41, 42, 43 comprises only one antenna unit as receive antenna, i.e. $M_i = M = 1$. The base station 21 transmits one data stream $s_j$ to each multiple antenna mobile station 41, 42, 43. In order to allow each multiple antenna mobile station 41, 42, 43 $j$ to receive only the data stream $s_j$ intended for it, the base station 21 applies certain antenna weights, defined by the precoding vectors, to the data streams the base station 21 sends out. The vector **t** of the transmitted signals from the $N$ base station transmit antennas can be written in matrix notation as

$$\mathbf{t} = \begin{pmatrix} t_1 \\ t_2 \\ \vdots \\ t_N \end{pmatrix} = \underbrace{\begin{pmatrix} p_{11} & p_{12} & \cdots & p_{1L} \\ p_{21} & p_{22} & \cdots & p_{2L} \\ \vdots & \vdots & \ddots & \vdots \\ p_{N1} & p_{N2} & \cdots & p_{NL} \end{pmatrix}}_{\underbrace{(\mathbf{p}_1 \quad \mathbf{p}_2 \quad \cdots \quad \mathbf{p}_L)}_{\mathbf{P}}} \cdot \underbrace{\begin{pmatrix} s_1 \\ s_2 \\ \vdots \\ s_L \end{pmatrix}}_{\mathbf{s}} \,,$$

with the vector of the data streams s, the antenna weights, i.e. the precoding column vectors, $\mathbf{p}_j$, $j = 1,..., L$, which define a precoding matrix **P**. The received signal at each mobile station 41, 42, 43 $j$ is

$$r_1^{(j)} = \mathbf{h}_1^{(j)}\mathbf{t} + n_1^{(j)} = \left( h_{11}^{(j)} \quad h_{12}^{(j)} \quad \cdots \quad h_{1N}^{(j)} \right) \cdot \mathbf{t} + n_1^{(j)} \,,$$

with the channel row vector $\mathbf{h}_1^{(j)}$ describing the channels between the $N$ antenna units, i.e. the transmit antennas, of the base station 21 and the mobile station's receive antenna. $n_1^{(j)}$ is an additive noise and inter-cell interference term. The received signal at each mobile station 41, 42, 43 $j$ can be further rewritten as

$$r_1^{(j)} = \mathbf{h}_1^{(j)} \cdot \mathbf{t} + n_1^{(j)} = \mathbf{h}_1^{(j)} \cdot \left( \mathbf{p}_1 \quad \mathbf{p}_2 \quad \cdots \quad \mathbf{p}_L \right) \cdot \mathbf{s} + n_1^{(j)}$$

$$r_1^{(j)} = \left( \mathbf{h}_1^{(j)} \cdot \mathbf{p}_1 \quad \mathbf{h}_1^{(j)} \cdot \mathbf{p}_2 \quad \cdots \quad \mathbf{h}_1^{(j)} \cdot \mathbf{p}_L \right) \cdot \mathbf{s} + n_1^{(j)}$$

$$= \mathbf{h}_1^{(j)} \cdot \mathbf{p}_j \cdot s_j + \sum_{n=1, n \neq j}^{L} \mathbf{h}_1^{(j)} \cdot \mathbf{p}_n \cdot s_n + n_1^{(j)}$$

The term $\mathbf{h}_1^{(j)} \cdot \mathbf{p}_j \cdot s_j$ describes the signal for each mobile station 41, 42, 43 $j$, and the term $\displaystyle\sum_{n=1, n \neq j}^{L} \mathbf{h}_1^{(j)} \cdot \mathbf{p}_n \cdot s_n$ describes the intra-cell spatial (multi-user) interference observed by the mobile station 41, 42, 43 $j$.

In order to allow each mobile station 41, 42, 43 $j$ to receive its data stream $s_j$ properly, the base station 21 selects the precoding vectors in such a way that the intra-cell spatial interference is kept at an acceptable level with respect to the desired signal. Examples are:

$$\mathbf{h}_1^{(j)} \cdot \mathbf{p}_j \cdot s_j \gg \sum_{n=1, n \neq j}^{L} \mathbf{h}_1^{(j)} \cdot \mathbf{p}_n \cdot s_n \,,$$

or, more stringent,

$$\begin{cases} \mathbf{h}_1^{(j)} \cdot \mathbf{p}_j \neq 0 \\ \displaystyle\sum_{n=1, n \neq j}^{L} \mathbf{h}_1^{(j)} \cdot \mathbf{p}_n \cdot s_n = 0 \end{cases} .$$

This selection at the base station 21 is performed in such a way that the above conditions are fulfilled for all $L$ selected mobile stations. It is possible to include the two criteria given, and in particular the actual data streams $s_j$, $j = 1,..., L$, into the selection process. It is also possible to include some function of the terms

$\mathbf{h}_1^{(j)} \cdot \mathbf{p}_n$, $n = 1,\ldots, L$, $n \neq j$ into the selection process, which will then be used as a measure for the intra-cell interference, preferably with the mean power of the $s_j$ as a parameter.

It is assumed that base station 21 transmits data stream $s_j$ to the mobile stations 41, 42, 43 $j$, and that the precoding vectors $\mathbf{p}_i$, $i = 1,\ldots, L$, $i \neq j$ are selected in such a way that the intra-cell spatial interference from the other data stream $s_i$, $i = 1,\ldots, L$, $i \neq j$ is low or at some acceptable level at the multiple antenna mobile station 41, 42, 43 $j$.

If the multiple antenna mobile station 41, 42, 43 $j$ comprises $M$, wherein $M \geq 2$, receive antennas, in matrix notation, the received signals $r_m^{(j)}$, $m = 1,\ldots, M$ at the individual receive antennas are

$$\mathbf{r}^{(j)} = \begin{pmatrix} r_1^{(j)} \\ r_2^{(j)} \\ \vdots \\ r_M^{(j)} \end{pmatrix} = \underbrace{\begin{pmatrix} \mathbf{h}_1^{(j)} \\ \mathbf{h}_2^{(j)} \\ \vdots \\ \mathbf{h}_M^{(j)} \end{pmatrix}}_{\mathbf{H}^{(j)}} \cdot \mathbf{t} + \begin{pmatrix} n_1^{(j)} \\ n_2^{(j)} \\ \vdots \\ n_M^{(j)} \end{pmatrix} = \begin{pmatrix} h_{11}^{(j)} & h_{12}^{(j)} & \ldots & h_{1N}^{(j)} \\ h_{21}^{(j)} & h_{22}^{(j)} & \ldots & h_{2N}^{(j)} \\ \vdots & \vdots & \ddots & \vdots \\ h_{M1}^{(j)} & h_{M2}^{(j)} & \ldots & h_{MN}^{(j)} \end{pmatrix} \cdot \mathbf{t} + \begin{pmatrix} n_1^{(j)} \\ n_2^{(j)} \\ \vdots \\ n_M^{(j)} \end{pmatrix}$$

$$= \begin{pmatrix} h_{11}^{(j)} & h_{12}^{(j)} & \ldots & h_{1N}^{(j)} \\ h_{21}^{(j)} & h_{22}^{(j)} & \ldots & h_{2N}^{(j)} \\ \vdots & \vdots & \ddots & \vdots \\ h_{M1}^{(j)} & h_{M2}^{(j)} & \ldots & h_{MN}^{(j)} \end{pmatrix} \cdot \begin{pmatrix} p_{11} & p_{12} & \cdots & p_{1L} \\ p_{21} & p_{22} & \cdots & p_{2L} \\ \vdots & \vdots & \ddots & \vdots \\ p_{N1} & p_{N2} & \cdots & p_{NL} \end{pmatrix} \begin{pmatrix} s_1 \\ s_2 \\ \vdots \\ s_L \end{pmatrix} + \begin{pmatrix} n_1^{(j)} \\ n_2^{(j)} \\ \vdots \\ n_M^{(j)} \end{pmatrix}$$

$$= \mathbf{H}^{(j)} \cdot \begin{pmatrix} \mathbf{p}_1 & \mathbf{p}_2 & \ldots & \mathbf{p}_L \end{pmatrix} \cdot \begin{pmatrix} s_1 \\ s_2 \\ \vdots \\ s_L \end{pmatrix} + \underbrace{\begin{pmatrix} n_1^{(j)} \\ n_2^{(j)} \\ \vdots \\ n_M^{(j)} \end{pmatrix}}_{\mathbf{n}^{(j)}}$$

$$= \mathbf{H}^{(j)} \cdot \mathbf{p}_j \cdot s_j + \sum_{i=1, i \neq j}^{L} \mathbf{H}^{(j)} \cdot \mathbf{p}_i \cdot s_i + \mathbf{n}^{(j)}$$

The term $\mathbf{H}^{(j)} \cdot \mathbf{p}_j \cdot s_j$ is the desired signal at the multiple antenna mobile station 41, 42, 43 $j$, the term $\sum_{i=1, i \neq j}^{L} \mathbf{H}^{(j)} \cdot \mathbf{p}_i \cdot s_i$ is the intra-cell spatial interference. $\mathbf{n}^{(j)}$ is an additive noise and inter-cell interference vector.

The control units 410 of the multiple antenna mobile stations 41, 42, 43 combine the antenna signals from the vector $\mathbf{r}^{(j)}$ in order to estimate the transmitted data stream $s_j$. For this purpose, a weighting vector $\mathbf{w}^{(j)}$ is calculated. The estimated data stream is then $\hat{s}_j = \mathbf{w}^{(j)} \cdot \mathbf{r}^{(j)}$. The weighting vector $\mathbf{w}^{(j)}$ defining the receive antenna weights is calculated by means of multiplying the channel matrix $\mathbf{H}^{(j)}$ by the precoding matrix $\mathbf{P}$ as shown in the forgoing equations.

Each of the multiple antenna mobile stations 41, 42, 43 $j$ only knows its own PVI (PVI = precoding vector index) which is associated with precoding vector $\mathbf{p}_j$ by means of the code book. In this case, it is possible to perform a MRC (MRC = maximum ratio combining) of the antenna signal at the multiple antenna mobile station 41, 42, 43. In such a case, only the column vector $\mathbf{H}^{(j)} \cdot \mathbf{p}_j$ is used for the calculation of the weighting vector $\mathbf{w}^{(j)}$. The MRC weighting vector is calculated as $\mathbf{w}^{(j)} = \mathbf{H}^{(j)} \cdot \mathbf{p}_j / ((\mathbf{H}^{(j)} \cdot \mathbf{p}_j)^{\mathsf{H}} \cdot (\mathbf{H}^{(j)} \cdot \mathbf{p}_j))$.

Preferably, one way of improving the performance of the multiple antenna mobile station 41, 42, 43 comprising two or more receive antennas, in particular, lowering error probabilities and/or enhancing user data throughput, is as follows:

Each of the multiple antenna mobile stations 41, 42, 43 $j$ knows the precoding vector indices of the precoding vector $\mathbf{p}_j$ and also the precoding vector indices of all other used precoding vectors $\mathbf{p}_i$, $i = 1,\ldots, L$, $i \neq j$ actually used by the base station 21 on the same time/frequency resources. In this case, the multiple antenna mobile station 41, 42, 43 has all information to perform intra-cell (multi-user) spatial interference rejection combining (SIRC = intra-cell spatial interference rejection combining) of the received antenna signal. Not only the column vector $\mathbf{H}^{(j)} \cdot \mathbf{p}_j$ is used for the calculation of the weighting vector $\mathbf{w}^{(j)}$, but the complete matrix $\mathbf{H}^{(j)} \cdot (\mathbf{p}_1 \ \mathbf{p}_2 \ ... \ \mathbf{p}_L)$ is taken into account. Different approaches, e.g. a zero-forcing (ZF = zero-forcing) approach or an minimum mean squared error (MMSE = minimum mean squared error) approach, could be used to solve this equation and calculate the weighting vector. Regardless of the actual weighting vector calculation approach, the remaining intra-cell spatial interference is further reduced.

It is possible to enable intra-cell spatial interference rejection combining by downlink signaling of preferred precoding vector indices. In order to perform SIRC at the multiple antenna mobile stations 41, 42, 43 $j$ in the MU-MIMO system, not only the preferred precoding vector index of the precoding vector $\mathbf{p}_j$ used for the data stream $s_j$ are known at the multiple antenna mobile stations 41, 42, 43 $j$ , but the base station 21 signals all precoding vector indices of the precoding vectors $\mathbf{p}_i$, $i$ =1,..., $L$ used for all data streams $s_i$ , $i$ = 1,..., $L$ to all mobile stations 41, 42, 43 $j$. This can be achieved by appropriate signaling in the downlink direction via the downlink channel 1001, 2001, 3001. In this case, the knowledge of preferred precoding vector indices of the precoding vectors is available to all mobile stations 41, 42, 43 $j$ , $j$ = 1,..., $L$ , at least to all multiple antenna mobile stations 41, 42, 43 comprising two or more receive antennas.

Furthermore, it is also possible to perform intra-cell spatial interference rejection combining with successive weight optimization. This means that it is possible to enable SIRC without explicit knowledge of the actually used precoding vector indices. However, the precoding vector index of the precoding vector $\mathbf{p}_j$ used for the data stream $s_j$ is known at the multiple antenna mobile station 41, 42, 43 $j$ either by explicit downlink signaling or implicitly because the base station 21 only uses the precoding vector $\mathbf{p}_j$ which the multiple antenna mobile station 41, 42, 43 $j$ has reported to the base station 21 via the uplink channel 1002, 2002, 3002. As the code book consists of a finite number of entries, the control units 410 of the multiple antenna mobile stations 41, 42, 43 can go through all valid combinations of precoding vectors, i.e. all valid precoding matrices. Thereby, the control units 410 of the multiple antenna mobile station 41, 42, 43 execute one of the two procedures described in the following:

The control units 410 of the multiple antenna mobile stations 41, 42, 43 can either go through all valid precoding matrices and calculates the post-detection signal-to-noise-and-interference-ratio. "Post-detection" means after multiplication of the resulting weighting vector with the received signal vector. An estimation of the power of the additive noise might be required. The receiver, i.e. the control unit of the multiple antenna mobile station 41, 42, 43, then selects the valid precoding vector combination or the precoding matrix, which gives the lowest post-detection signal-to-noise-and-interference-ratio for calculating the actual weighting vector.

Another possibility is that the control unit of the multiple antenna mobile station 41, 42, 43 takes one of the valid precoding matrices and calculates the weighting vector and an estimate $\hat{s}_j$ of the data stream $s_j$. Then, the control units 410 of the multiple antenna mobile stations 41, 42, 43 perform FEC (FEC = forward error-correction) decoding. If correct decoding is possible, i.e. if a CRC (CRC = cyclic redundancy check) check of the decoded data stream passes, the control unit 410 stops going through the valid precoding matrices. Otherwise, the control units 410 of the multiple antenna mobile stations 41, 42, 43 take the next valid precoding matrix, calculate the weighting vector and an estimate $\hat{s}_j$ of the data stream $s_j$, perform FEC decoding and so on. This process is repeated until a correct decoding is possible. In case of high intra-cell spatial interference it is possible that there is no correct decoding. Then, the received data block or stream is discarded and/or a retransmission of the data block or stream is initiated.

Furthermore, in order to reduce the processing load at the control unit of the multiple antenna mobile station 41, 42, 43, the repetitions may be stopped after a certain number of repetitions is reached, even if no correct decoding is possible. Then, the received data block is discarded and/or retransmission is initiated.

Preferably, the number of valid precoding matrices is kept low in order to keep the number of calculations executed by the control unit of the multiple antenna mobile station 41, 42, 43 at an acceptable level so that the power consumption at the mobile station is restricted to an acceptable amount .

For example a list of valid precoding matrices is defined, wherein the valid precoding matrix is a precoding matrix comprising valid precoding vector combinations. The list of valid precoding matrices is known to the base station 21 and to the mobile station 41, 42, 43. This list of valid precoding matrices has fewer entries than theoretically possible precoding vector combinations.

For instance, a precoding vector defines a beam form which can be generated by the two or more transmit antennas of the base station 21. Such a precoding vector is also called beam-forming precoding vector. An example for the construction of a list for a beam-forming precoding vector code book is that there should be at least two unoccupied beams between beams which are actually used. If there are six beams available, for example, there could be the combination of beam 1 with beam 4, beam 5, or beam 6, the combination of beam 2 with beam 5 or beam 6, etc.. The entries in the list may be ordered in such a way that the average number of precoding matrices which the multiple antenna mobile station 41, 42, 43 has to test is minimized. The multiple antenna mobile station 41, 42, 43 can test the precoding matrices from the list in ascending order.

It is possible that the base station 21 orders the indices of the precoding vectors in such a way that similar precoding vectors are indexed with a similar index, with the index preferably being a number. For instance, the code book comprises six precoding vectors $\mathbf{p}_i$ with index i = 1, 2, 3, 4, 5, and 6. These six precoding vectors are ordered or arranged in such a away that the absolute difference of two of the indices i = 1, 2, 3, 4, 5, or 6 is indirectly related to an amount of intra-cell spatial interference. For instance, the precoding vector indices i define beam forms which can be generated by the two or more transmit antennas of the base station. In this case, similar indices correspond to similar beam forms, whereby each beam form is defined by a unique precoding vector.

Preferably, the base station 21 only uses precoding vector combinations according to a concept of preferred precoding vector indices and preferred companion precoding vector indices. Only indices of precoding vectors are transmitted between the base station 21 and the mobile stations, wherein the code book comprises the assignment of precoding vector indices to the respective precoding vector. According to the concept of preferred precoding vector indices and preferred companion precoding vector indices, the multiple antenna mobile stations 41, 42, 43 do not only report their preferred precoding vector indices in an uplink feedback via the uplink channel 1002, 2002, 3002, but also the indices of preferred companion precoding vectors. Preferred companion precoding vectors produce very little or at least acceptable spatial multi-user interference at the mobile station. The base station 21 then selects the mobile stations 41, 42, 43 in such a way that the preferred precoding vector indices may be mutually exclusive and the preferred precoding vector indices of each mobile station 41, 42, 43 are within a set of preferred companion precoding vector indices of all other mobile stations, or at least that the preferred precoding vector indices of each mobile station are within the set of preferred companion precoding vector indices of a large number of other mobile stations served by the base station 21.

For example, the mobile station 41 reports the precoding vector $\mathbf{p}_1$ as preferred precoding vector, and the precoding vectors $\mathbf{p}_4$ and $\mathbf{p}_6$ as preferred companion precoding vectors; the mobile station 42 reports the precoding vector $\mathbf{p}_4$ as preferred precoding vector, and the precoding vectors $\mathbf{p}_1$ and $\mathbf{p}_6$ as preferred companion precoding vectors; and the mobile station 43 reports the precoding vector $\mathbf{p}_6$ as preferred precoding vector, and the precoding vectors $\mathbf{p}_1$ and $\mathbf{p}_4$ as preferred companion precoding vectors. In such a case, the base station 21 will assign the precoding vector $\mathbf{p}_1$ to the mobile station 41, the precoding vector $\mathbf{p}_4$ to the mobile station 42, and the precoding vector $\mathbf{p}_6$ to the mobile station 43. In this case, it is possible to define a threshold value for companion precoding vectors with a minimum absolute difference of indices |i-j|, e.g. |i-j| equals 2.

As the mobile station 41, 42, 43 knows which preferred companion precoding vector indices it has reported to the base station 21, it may only test precoding vector combinations with the preferred precoding vector indices and preferred companion precoding vector indices, i.e. it creates the preferred precoding matrices based on these combinations and applies one of the approaches described with regard to the valid precoding matrices to calculate the weighting vector.

## Claims

1. A method of reducing intra-cell spatial interference in a mobile cellular network, wherein the method comprises the steps of:

   providing, by a base station (21), a code book comprising a set of precoding vectors defining antenna weights of two or more transmit antennas of the base station (21),
   informing at least one multiple antenna mobile station (41, 42, 43) about a subset of one or more precoding vectors selected from the code book associated with the base station (21), the at least one multiple antenna mobile station (41, 42, 43) comprises two or more receive antennas (430),
   determining, by the at least one multiple antenna mobile station (41, 42, 43), receive antenna weights associated with the two or more receive antennas (430) of the at least one multiple antenna mobile station (41, 42, 43) based on the subset of one or more precoding vectors, and
   applying, by the at least one multiple antenna mobile station (41, 42, 43), the determined receive antenna weights to its associated receive antenna of the two or more receive antennas (430) of the at least one multiple antenna mobile station (41, 42, 43) for performing intra-cell spatial interference rejection combining.

2. A method of reducing intra-cell spatial interference in a mobile cellular network according to claim 1, wherein the subset of one or more precoding vectors comprises the precoding vectors actually used by the base station (21) for the mobile stations (41, 42, 43) served by the base station (21) on the same time/frequency resource the at least one multiple antenna mobile station (41, 42, 43) is served on.

3. A method of reducing intra-cell spatial interference in a mobile cellular network according to claim 2, wherein the base station (21) informs the at least one multiple antenna mobile station (41, 42, 43) about the subset of one or more precoding vectors by means of signaling.

**4.** A method of reducing intra-cell spatial interference in a mobile cellular network according to claim 1, wherein the at least one multiple antenna mobile station (41, 42, 43) creates a precoding matrix from the received subset of one or more precoding vectors and calculates a weighting vector defining the receive antenna weights by means of multiplying a channel matrix by the precoding matrix.

**5.** A method of reducing intra-cell spatial interference in a mobile cellular network according to claim 1, wherein the subset of one or more precoding vectors comprises a list of valid precoding vector combinations.

**6.** A method of reducing intra-cell spatial interference in a mobile cellular network according to claim 5, wherein the method comprises the further steps of:

> selecting from the code book two or more valid precoding vector combinations, wherein there are less valid than possible precoding vector combinations.

**7.** A method of reducing intra-cell spatial interference in a mobile cellular network according to claim 1, wherein the method comprises the steps of:

> calculating, by the at least one multiple antenna mobile station (41, 42, 43), one or more preferred precoding vectors and one or more preferred companion precoding vectors and selecting one or more precoding vector combinations which comprise at least one preferred precoding vector and at least one companion precoding vector as preferred precoding vector combinations, wherein the subset of one or more precoding vectors comprises a list composed of the preferred precoding vector combinations.

**8.** A method of reducing intra-cell spatial interference in a mobile cellular network according to claim 5 to claim 7, wherein the method comprises the further steps of:

> creating a precoding matrix for each valid or preferred precoding vector combination comprising the respective valid or preferred precoding vector combination, calculating the post-detection signal-to-interference-and-noise-ratio for each precoding matrix and choosing the precoding matrix which gives the lowest post-detection signal-to-interference-and-noise-ratio for the calculation of a weighting vector which defines the receive antenna weights of the multiple antenna mobile station (41, 42, 43).

**9.** A method of reducing intra-cell spatial interference in a mobile cellular network according to claim 5 to claim 7, wherein the method comprises the further steps of:

> creating one or more precoding matrices, each precoding matrix comprises one of the valid or preferred precoding vector combinations, calculating a weighting vector defining the receive antenna weights of the multiple antenna mobile station (41, 42, 43),
> applying the receive antenna weights defined by the weighting vector on the two or more receive antennas (430) of the at least one multiple antenna mobile station (41, 42, 43),
> performing forward error correction decoding on a data stream received from the base station (21), and
> repeating the foregoing steps of calculating , applying and performing for the next precoding matrix if correct decoding is not possible.

**10.** A multiple antenna mobile station (41, 42, 43) in a mobile cellular network, wherein the multiple antenna mobile station (41, 42, 43) comprises two or more receive antennas (430) and a control unit, the control unit (410) is adapted to:

> determine receive antenna weights associated with the two or more receive antennas (430) of the multiple antenna mobile station (41, 42, 43) based on a subset of precoding vectors selected from a code book associated with the base station (21), the code book comprising a subset of one or more precoding vectors defining antenna weights of two or more transmit antennas of a base station (21), and
> apply the determined receive antenna weights to their associated receive antenna of the two or more receive antennas (430) of the multiple antenna mobile station (41, 42, 43) for performing intra-cell spatial interference rejection combining.

Fig. 1

# EP 2 141 825 A1

Europäisches Patentamt
European Patent Office
Office européen des brevets

## EUROPEAN SEARCH REPORT

Application Number

EP 08 29 0632

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2008/132689 A (KONINKL PHILIPS ELECTRONICS NV [NL]; BAKER MATTHEW P J [GB]; MOULSLEY) 6 November 2008 (2008-11-06) * abstract * * page 1, line 23 - page 4, line 24 * * page 5, line 9 - page 6, line 24 * * claim 1 * | 1-3,5,10 | INV. H04B7/04 H04B7/06 |
| X | US 2005/041750 A1 (LAU KIN NANG [CN]) 24 February 2005 (2005-02-24) | 1-6,10 | |
| A | * abstract * * paragraphs [0009] - [0011], [0015] - [0035] * * claim 1 * | 7-9 | |
| X | EP 1 775 855 A (SAMSUNG ELECTRONICS CO LTD [KR]) 18 April 2007 (2007-04-18) | 1,4,5,10 | |
| A | * abstract * * paragraphs [0006] - [0010], [0017] - [0028], [0046], [0047], [0066] - [0072] * | 2,3,6-9 | |
| | | | TECHNICAL FIELDS SEARCHED (IPC) |
| | | | H04B |
| A | CHENG WANG ET AL: "MU-MISO Transmission with Limited Feedback" IEEE TRANSACTIONS ON WIRELESS COMMUNICATIONS, IEEE SERVICE CENTER, PISCATAWAY, NJ, US, vol. 6, no. 11, 1 November 2007 (2007-11-01), pages 3907-3913, XP011197000 ISSN: 1536-1276 * page 3907 * * page 3908, left-hand column * | 1-10 | |

The present search report has been drawn up for all claims

| Place of search | Date of completion of the search | Examiner |
|---|---|---|
| Munich | 29 January 2009 | Fernández Cuenca, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

11

## ANNEX TO THE EUROPEAN SEARCH REPORT
## ON EUROPEAN PATENT APPLICATION NO.

EP 08 29 0632

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2009

| Patent document cited in search report | | Publication date | Patent family member(s) | | Publication date |
|---|---|---|---|---|---|
| WO 2008132689 | A | 06-11-2008 | NONE | | |
| US 2005041750 | A1 | 24-02-2005 | NONE | | |
| EP 1775855 | A | 18-04-2007 | CN 101288244 | A | 15-10-2008 |
| | | | WO 2007046621 | A1 | 26-04-2007 |
| | | | KR 20070042100 | A | 20-04-2007 |
| | | | US 2007086543 | A1 | 19-04-2007 |

EPO FORM P0459

For more details about this annex : see Official Journal of the European Patent Office, No. 12/82